# EUROPEAN PATENT APPLICATION

(11) **EP 3 828 770 A1**
(43) Date of publication of application: **02.06.2021**
(21) Application number: 20208892.8
(22) Date of filing: 20.11.2020
(51) Int. Cl.: G06K 15/02

(54) **IMAGE PROCESSING APPARATUS, IMAGE PROCESSING SYSTEM, IMAGE PROCESSING METHOD, AND CARRIER MEDIUM**

(30) Priority: 28.11.2019 JP 2019215836
(71) Applicant: Ricoh Company, Ltd., Tokyo 143-8555 (JP)
(72) Inventor: TAKAMIZAWA, Takuma, Tokyo, 143-8555 (JP)
(74) Representative: SSM Sandmair

(57) **Abstract**

An image processing apparatus (102) includes an image data acquisition unit (11) that acquires first-side image data and second-side image data, an image processing unit (12) that generates first drawing image data, based on the first-side image data, a read image data acquisition unit (13) that acquires read image data of an image formed on a first side of a recording medium according to the first drawing image data, a characteristic pixel extraction unit (14) that extracts a characteristic pixel, based on the first-side image data, and a correction unit (15) that calculates a correction value for correction of the second-side image data, based on a position of a pixel corresponding to the characteristic pixel included in the first drawing image data and that included in the read image data. The image processing unit (12) generates second drawing image data, based on the second-side image data and the correction value.

## Description

### BACKGROUND

### Technical Field

Embodiments of the present invention relate to an image processing apparatus, an image processing system, an image processing method, and a carrier medium carrying program code that causes a computer to perform the image processing method.

### Related Art

As in JP-3630979-B (JP-H11-315484-A), for example, there has been known a technique of printing a reference point in a user image with a special colorant that is visible under special conditions, detecting the reference point included in the printed user image with a special sensor, and correcting a back-side image, based on the detected reference point, to adjust the positions of a front-side image and the back-side image.

However, such a conventional technique uses a configuration including, e.g., a special colorant or a special sensor.

### SUMMARY

In light of the above-described problem, it is a general object of the present invention to adjust a front-side position and a back-side position without using a special configuration.

In order to achieve the above-mentioned object, there is provided a fixing device according to claim 1. Advantageous embodiments are defined by the dependent claims. Advantageously, the image processing apparatus includes an image data acquisition unit, an image processing unit, a read image data acquisition unit, a characteristic pixel extraction unit, and a correction unit. The image data acquisition unit is configured to acquire first-side image data and second-side image data. The image processing unit is configured to generate, based on the first-side image data, first drawing image data indicating an image to be formed on a first side of a recording medium. The read image data acquisition unit is configured to acquire read image data of the image formed on the first side of the recording medium according to the first drawing image data. The characteristic pixel extraction unit is configured to extract a characteristic pixel, based on the first-side image data. The correction unit is configured to calculate a correction value for correction of the second-side image data, based on a position of a pixel corresponding to the characteristic pixel included in the first drawing image data and a position of the pixel corresponding to the characteristic pixel included in the read image data. The image processing unit is configured to generate, based on the second-side image data acquired by the image data acquisition unit and the correction value, second drawing image data indicating an image to be formed on a second side of the recording medium.

Accordingly, the front-side position and the back-side position are adjusted without using a special configuration.

### BRIEF DESCRIPTION OF THE DRAWINGS

A more complete appreciation of the embodiments and many of the attendant advantages and features thereof can be readily obtained and understood from the following detailed description with reference to the accompanying drawings, wherein:
FIG. 1 is a block diagram illustrating an overall configuration of an image processing system according to an embodiment of the present invention;
FIG. 2 is a block diagram illustrating a hardware configuration of an image processing apparatus according to an embodiment of the present invention;
FIG. 3 is a block diagram illustrating a hardware configuration of an image forming apparatus according to an embodiment of the present invention;
FIG. 4 is a block diagram illustrating a functional configuration of an image processing system according to an embodiment of the present invention;
FIG. 5 including FIGS. 5(A) to 5(E) is a diagram illustrating a first processing example according to an embodiment of the present invention;
FIG. 6 including FIGS. 6(A) to 6(E) is a diagram illustrating a second processing example according to an embodiment of the present invention;
FIG. 7 is a diagram illustrating an example of correction by projective transformation according to an embodiment of the present invention;
FIG. 8 is a diagram illustrating an operation screen according to an embodiment of the present invention; and
FIG. 9 is a flowchart of an overall process according to an embodiment of the present invention.

The accompanying drawings are intended to depict embodiments of the present disclosure and should not be interpreted to limit the scope thereof. Also, identical or similar reference numerals designate identical or similar components throughout the several views.

### DETAILED DESCRIPTION

In describing embodiments illustrated in the drawings, specific terminology is employed for the sake of clarity. However, the disclosure of the present specification is not intended to be limited to the specific terminology so selected and it is to be understood that each specific element includes all technical equivalents that have a similar function, operate in a similar manner, and achieve a similar result.

Although the embodiments are described with technical limitations with reference to the attached drawings, such description is not intended to limit the scope of the disclosure and not all of the components or elements described in the embodiments of the present disclosure are indispensable to the present disclosure.

In a later-described comparative example, embodiment, and exemplary variation, for the sake of simplicity, like reference numerals are given to identical or corresponding constituent elements such as parts and materials having the same functions, and redundant descriptions thereof are omitted unless otherwise required.

As used herein, the singular forms "a," "an," and "the" are intended to include the plural forms as well, unless the context clearly indicates otherwise.

It is to be noted that, in the following description, suffixes C, M, Y, and K denote colors of cyan, magenta, yellow, and black, respectively. To simplify the description, these suffixes are omitted unless necessary.

Referring to the drawings, wherein like reference numerals designate identical or corresponding parts throughout the several views, embodiments of the present disclosure are described below.

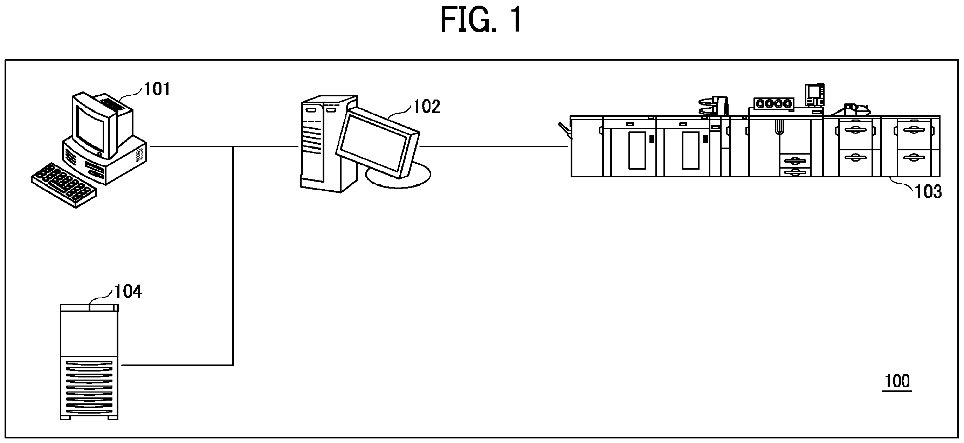

Initially with reference to FIG. 1, a description is given of an overall configuration of an image processing system.

FIG. 1 is a block diagram illustrating an overall configuration of an image processing system 100 according to an embodiment of the present invention.

For example, the image processing system 100 has an overall configuration including a client personal computer (PC) serving an example of a user terminal, a digital front end (DFE) serving as an example of an image processing apparatus, an image forming apparatus 103, and a management server 104 serving as an example of a management apparatus. The client PC and the DFE included in the image processing system 100 are hereinafter referred to as a "client PC 101" and a "DFE 102," respectively.

The client PC 101 generates a print job according to a request from a user and transmits the print job to the DFE 102 or the management server 104. For example, the client PC 101 has a hardware configuration including a display such as a liquid crystal display and an input device such as a mouse and a keyboard. A detailed description of the hardware configuration is deferred.

The DFE 102 receives a print job from, e.g., the client PC 101 or the management server 104. Then, the DFE 102 generates drawing data with, e.g., a raster image processor (RIP) engine according to the received print job and transmits the drawing data to the image forming apparatus 103. A detailed description of the hardware configuration is deferred.

The image forming apparatus 103 forms an image according to the drawing data received from the DFE 102. A detailed description of the hardware configuration is deferred.

The management server 104 manages a print job received from the client PC 101. The management server 104 also transmits the print job to, e.g., the DFE 102 in response to a request from the DFE 102. A detailed description of the hardware configuration is deferred.

Specifically, the DFE 102 communicates with the image forming apparatus 103 to control, e.g., image formation in the image forming apparatus 103. The client PC 101, for example, is connected to the DFE 102. The connection may be via a network.

The client PC 101 generates image information described in a language such as a page description language (PDL) with an application installed in advance. Then, the client PC 101 transmits the generated image information to the DFE 102. Next, the DFE 102 converts the image data (i.e., image information) described in a language such as PDL into image data in a format printable by the image forming apparatus 103. Subsequently, the DFE 102 transmits the image data to the image forming apparatus 103.

The image forming apparatus 103 is provided with at least CMYK inks. The image forming apparatus 103 is equipped with, e.g., heads for printing with ink, an image forming unit including a maintenance and supply assembly, and a drying assembly to fix ink.

The image forming apparatus 103 discharges ink onto a recording medium with each head according to image data transmitted from the DFE 102, and then dries and fixes the ink with a heater. Accordingly, an image is formed on the recording medium. Thus, a desired printed matter is obtained.

The image processing system 100 may include the management server 104. In the image processing system 100, the management server 104 may manage print data received from the client PC 101. The management server 104 may also transmit the print data to the DFE 102 in response to a request from the DFE 102. Note that the image processing system 100 may have a configuration including a DFE alone or a configuration including an image forming apparatus alone.

The configuration of the image forming apparatus according to an embodiment of the present invention is not limited to a configuration with an ink jet printer and ink. Alternatively, for example, the image forming apparatus may have an electrophotographic configuration with an electrophotographic printer and toner. However, the image forming apparatus desirably has a configuration that expands and contracts a recording medium during printing. That is, the image forming apparatus having a configuration with an ink jet printer and ink is more likely to attain advantageous effects.

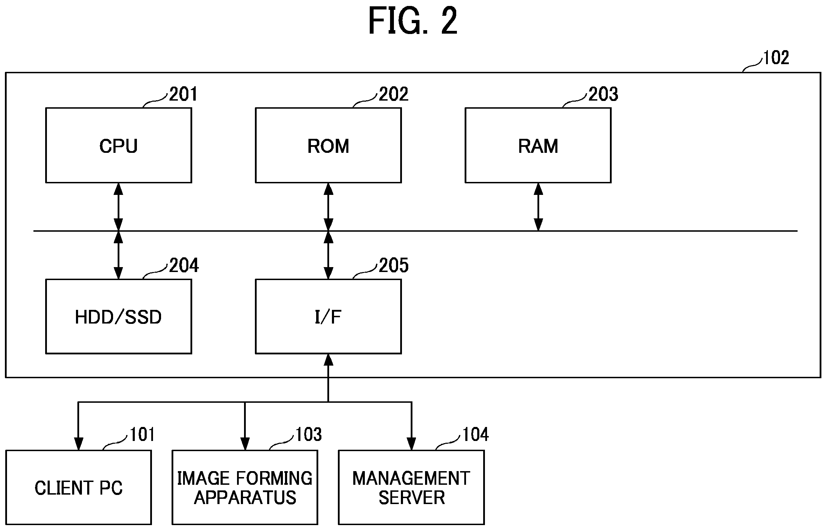

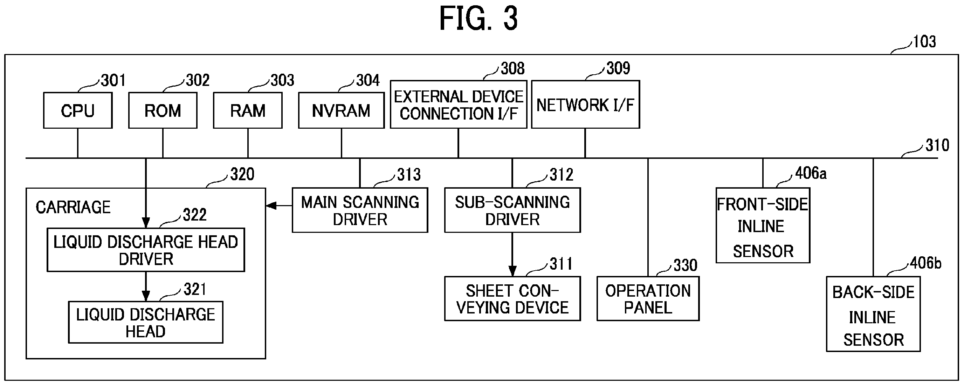

Referring now to FIGS. 2 and 3, a description is given of hardware configurations.

FIG. 2 is a block diagram illustrating a hardware configuration of an image processing apparatus according to an embodiment of the present invention.

For example, the client PC 101, the DFE 102, and the management server 104 have identical hardware configurations. A description is now given of a hardware configuration of the DFE 102 as a representative image processing apparatus. Note that examples of the image processing apparatus include, but are not limited to, a computer (or a PC), a server, and a smartphone. The image processing apparatuses may have different hardware configurations.

As illustrated in FIG. 2, the DFE 102 has a hardware configuration including a central processing unit (CPU), a read only memory (ROM), a random access memory (RAM), a hard disk drive (HDD)/solid state drive (SSD), and an interface (I/F). The CPU, the ROM, the RAM, the HDD/SSD, and the interface I/F included in the DFE 102 are hereinafter referred to as a "CPU 201," a "ROM 202," a "RAM 203," a "HDD/SSD 204," and an "I/F 205," respectively.

The CPU 201 uses the RAM 203 as a work area to execute a program stored in the ROM 202. Thus, the image processing apparatus has a configuration in which an arithmetic device, a control device, and a storage device cooperate to execute the program.

The HDD/SSD 204 is used as a storage device to store preset values. Note that information stored in the HDD/SSD 204 may be used by the CPU 201 when the CPU 201 executes a read program. Thus, the image processing apparatus may have a hardware configuration including an auxiliary storage device.

The I/F 205 is an interface that allows the DFE 102 to communicate with the client PC 101, the image forming apparatus 103, and the management server 104. Thus, the image processing apparatus has a hardware configuration including an input device and an output device.

Note that FIG. 2 illustrates an example of the hardware configuration. The image processing apparatus may have a hardware configuration further including an arithmetic device, a control device, a storage device, an input device, and an output device.

FIG. 3 is a block diagram illustrating a hardware configuration of the image forming apparatus 103 according to an embodiment of the present invention.

As illustrated in FIG. 3, the image forming apparatus 103 includes a CPU 301, a ROM 302, a RAM 303, a non-volatile random access memory (NVRAM) 304, an external device connection I/F 308, a network I/F 309, and a bus line 310. The image forming apparatus 103 further includes a sheet conveying device 311, a sub-scanning driver 312, a main scanning driver 313, a carriage 320, and an operation panel 330. The carriage 320 includes a liquid discharge head 321 and a liquid discharge head driver 322.

Among the components of the image forming apparatus 103 described above, the CPU 301 controls the operation of the entire image forming apparatus 103. The ROM 302 stores, e.g., a program that is used to boot the CPU 301, such as an initial program loader (IPL). The RAM 303 is used as a work area for the CPU 301. The NVRAM 304 stores various kinds of data such as a program. The NVRAM 304 retains various kinds of data even after the power of the image forming apparatus 103 is turned off. The external device connection I/F 308 is connected to a computer or a PC via, e.g., a universal serial bus (USB) cable to perform communication of control signals or data to be printed with the computer or the PC. The network I/F 309 is an interface to perform data communication through a communication network such as the Internet. The bus line 310 is, e.g., an address bus or a data bus to electrically connect the components such as the CPU 301.

The sheet conveying device 311 includes, e.g., a roller and a motor that drives the roller. The sheet conveying device 311 conveys a recording medium in a sub-scanning direction along a conveyance passage defined by internal components of the image forming apparatus 103. The sub-scanning driver 312 controls the movement of the sheet conveying device 311 in the sub-scanning direction. The main scanning driver 313 controls the movement of the carriage 320 in a main scanning direction.

The liquid discharge head 321 of the carriage 320 includes a plurality of nozzles to discharge liquid such as ink. The liquid discharge head 321 is mounted on the carriage 320 such that a discharge side (i.e., nozzle side) of the liquid discharge head 321 faces the recording medium. While moving in the main scanning direction, the liquid discharge head 321 discharges the liquid onto recording media, one by one, conveyed intermittently in the sub-scanning direction. Specifically, the liquid discharge head 321 discharges the liquid onto a predetermined position of the recording medium, thus forming an image on the recording medium. The liquid discharge head driver 322 is a driver to control the driving of the liquid discharge head 321.

The operation panel 330 includes, e.g., an alarm lamp and a touch panel that displays, e.g., a current input value and an operation screen and receives an operation from, e.g., a user.

Note that, instead of being mounted on the carriage 320, the liquid discharge head driver 322 may be connectable to the bus line 310 outside the carriage 320. Each of the main scanning driver 313, the sub-scanning driver 312, and the liquid discharge head driver 322 may serve as a function implemented by an instruction of the CPU 301 according to a program.

The image forming apparatus 103 further includes a front-side inline sensor 406a and a back-side inline sensor 406b. Hereinafter, the front-side inline sensor 406a and the back-side inline sensor 406b are collectively referred to as an "inline sensor 406."

The inline sensor 406 reads both sides of a recording medium and generates read image data indicating an image fixed on the recording medium. Note that the inline sensor 406 may be either the front-side inline sensor 406a or the back-side inline sensor 406b. For example, in a case in which the inline sensor 406 includes the front-side inline sensor 406a alone, the front-side inline sensor 406a reads an image formed on the front side of the recording medium in response to the completion of image formation on the front side. Thereafter, another image is formed on the other side of the recording medium.

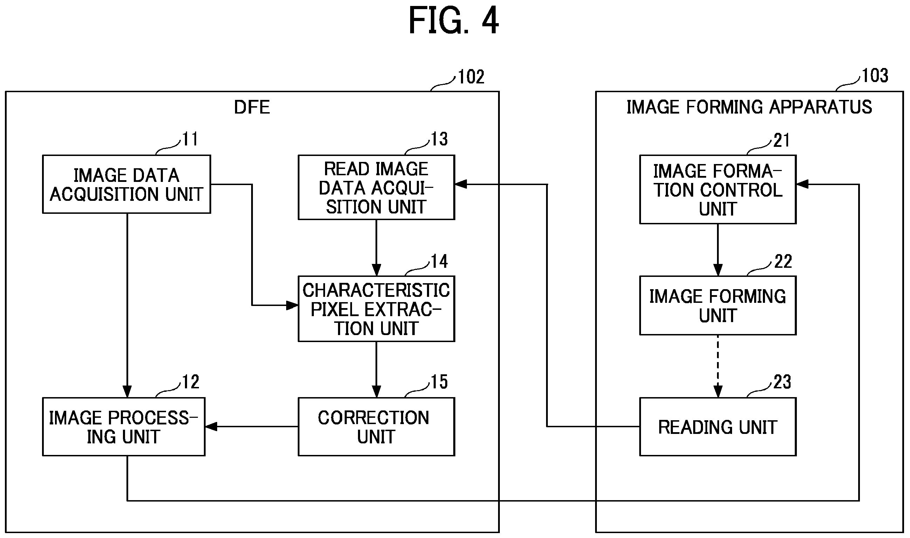

Referring now to FIG. 4, a description is given of a functional configuration of an image processing system.

FIG. 4 is a block diagram illustrating a functional configuration of the image processing system 100 according to an embodiment of the present invention.

The DFE 102 includes an image data acquisition unit 11, an image processing unit 12, a read image data acquisition unit 13, a characteristic pixel extraction unit 14, and a correction unit 15. Each function of the DFE 102 is implemented by the CPU 201 executing a program stored in the ROM 202 or the HDD/SSD 204.

The image forming apparatus 103 includes an image formation control unit 21, an image forming unit 22, and a reading unit 23.

The image data acquisition unit 11 acquires image data from a print job received from the client PC 101 or the management server 104. Then, the image data acquisition unit 11 outputs the acquired image data to the characteristic pixel extraction unit 14 and the image processing unit 12.

Note that image data indicating a first-side image, which is an image to be formed on a first side of a recording medium, is herein referred to as first-side image data. Image data indicating a second-side image, which is an image to be formed on a second side different from the first side of the recording medium, is herein referred to as second-side image data. Image data including the first-side image data and the second-side image data is herein referred to as original image data.

The image processing unit 12 performs color conversion or raster image processing on the first-side image data, based on the original image data received from the image data acquisition unit 11, to generate first drawing image data, which is RIP image data, for example. Then, the image processing unit 12 outputs the generated drawing image data to the image forming apparatus 103. At this time, the image processing unit 12 may add, to the image data, image data indicating a marker (hereinafter referred to as a "reference marker") for positional matching between an image to be formed on the front side of the recording medium and an image to be formed on the back side of the recording medium, to generate new image data.

The image processing unit 12 performs color conversion or raster image processing on the second-side image data, based on the second-side image data and a correction value received from the correction unit 15 described later, to generate second drawing image data, which is RIP image data, for example.

The read image data acquisition unit 13 outputs read image data acquired from the image forming apparatus 103 to the characteristic pixel extraction unit 14.

The characteristic pixel extraction unit 14 extracts a characteristic pixel (hereinafter occasionally referred to as a "printed matter marker") from an image indicated by the first drawing image data, based on the received first drawing image data. Note that the characteristic pixel is a characteristic pixel that is used for positional adjustment between an image formed on the front side of a recording medium and an image to be formed on the back side of the recording medium. The characteristic pixel extraction unit 14 may further extract a position of the reference marker such as a register mark, an L-shaped mark, or a cross mark from the read image data. The characteristic pixel extraction unit 14 outputs, to the correction unit 15, a position of the characteristic pixel extracted or a position of the reference marker extracted.

Based on the position of the characteristic pixel or the position of the reference marker received from the characteristic pixel extraction unit 14, the correction unit 15 calculates a correction value for correction of the second-side image data, indicating an image to be formed on the back side of a recording medium, of the original image data. Then, the correction unit 15 outputs the calculated correction value to the image processing unit 12.

The image formation control unit 21 receives the first drawing image data or the second drawing image data from the image processing unit 12 of the DFE 102. The image formation control unit 21 controls the image forming unit 22, to cause the image forming unit 22 to form an image on a recording medium according to the first drawing image data or the second drawing image data.

The reading unit 23 generates read image data from a result of reading the image formed on the recording medium with a scanner or a line sensor. Then, the reading unit 23 outputs the generated read image data to the DFE 102.

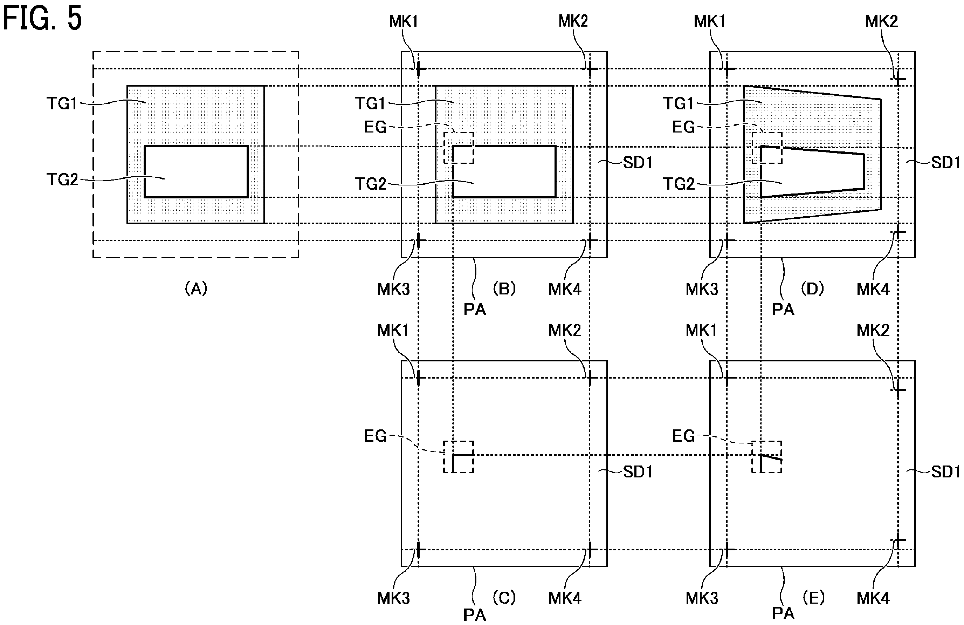

Referring now to FIG. 5, a description is given of a first processing example.

FIG. 5 including FIGS. 5(A) to 5(E) is a diagram illustrating a first processing example according to an embodiment of the present invention.

A description is now given of an example in which the first-side image data instructing formation of an image as illustrated in FIG. 5(A) is acquired. Specifically, in the present example, the image formation control unit 21 causes the image forming unit 22 to form, on the first side, images such as a first object TG1 and a second object TG2 as illustrated in FIG. 5(A), according to the first-side image data.

When such images are formed, an image as illustrated in FIG. 5(B) is formed on a first side SD1 of a recording medium PA, for example.

The image illustrated in FIG. 5(B) is different from the image illustrated in FIG. 5(A) in that the image illustrated in FIG. 5(B) includes a first marker MK1, a second marker MK2, a third marker MK3, and a fourth marker MK4 at four corners, respectively, in addition to the first object TG1 and the second object TG2.

In the present example, the characteristic pixel extraction unit 14 extracts, as a characteristic pixel, an edge portion EG as illustrated in FIG. 5. In other words, the characteristic pixel extraction unit 14 recognizes and extracts, as a characteristic pixel, the edge portion EG, which is an upper left portion of the second object TG2 as a boundary with the first object TG1 as illustrated in FIG. 5.

Note that the characteristic pixel is a characteristic pixel extracted from the first-side image data. For example, the characteristic pixel may be a plurality of continuous pixels of, e.g., a straight-line portion of an L shape. Alternatively, the characteristic pixel may be a plurality of discrete pixels.

The characteristic pixel extraction unit 14 may extract the characteristic pixel from the RIP image data. Alternatively, the characteristic pixel extraction unit 14 may extract the characteristic pixel from data in another format.

For example, the characteristic pixel extraction unit 14 stores the reference markers such as the first marker MK1, the second marker MK2, the third marker MK3, and the fourth marker MK4, together with the edge portion EG as positions illustrated in FIG. 5(C). Note that FIG. 5(C) illustrates the positions at which the reference markers and the edge portion EG are recognized in an ideal state in which the recording medium PA does not contract.

In a case in which the image forming unit 22 forms, on the first side SD1 of the recording medium PA, the reference markers and the first-side image, in short, the image as illustrated in FIG. 5(B), an image may be formed as illustrated in FIG. 5(D), as a result of image formation by the image forming unit 22.

Section FIG. 5(D) illustrates a result of reading by the reading unit 23. That is, the reading unit 23 reads the image formed on the first side SD1 as illustrated in FIG. 5(D). Next, when the characteristic pixel extraction unit 14 extracts the reference markers such as the first marker MK1, the second marker MK2, the third marker MK3, and the fourth marker MK4, together with the edge portion EG, read image data is generated as illustrated in FIG. 5(E), for example.

Specifically, the image illustrated in FIG. 5(D) is different from the image illustrated in FIG. 5(B) in that the second marker MK2 and the fourth marker MK4 are shifted inward in a longitudinal direction of the recording medium PA (i.e., vertical direction in FIG. 5). That is, FIG. 5(D) illustrates an example in which the recording medium PA contracts particularly on the side where the second marker MK2 and the fourth marker MK4 are located (i.e., right side of the recording medium PA in FIG. 5) during image formation. Thus, the correction unit 15 calculates a correction value, based on the position of a pixel corresponding to the characteristic pixel included in the first drawing image data indicating the image as illustrated in FIG. 5(C) and the position of a pixel corresponding to the characteristic pixel included in the read image data indicating the image as illustrated in FIG 5(E), for example.

In other words, the correction unit 15 compares FIG. 5(E) with FIG. 5(C) to calculate the correction value. Based on such a correction value, the image processing unit 12 corrects the effect of, e.g., contraction so that the image forming apparatus 103 forms an image on the second side with a reduced deviation from the first side image.

As illustrated in FIG. 5, since the reference markers are markers that are not included in an original user image, the reference markers may not be formed in an area in which the user image is to be formed on a recording medium in many cases. By contrast, a characteristic pixel that is formed in a print area of the recording medium PA, such as the edge portion EG, facilitates the accurate ascertainment of the contraction of the recording medium PA, allowing the correction unit 15 to perform accurate correction.

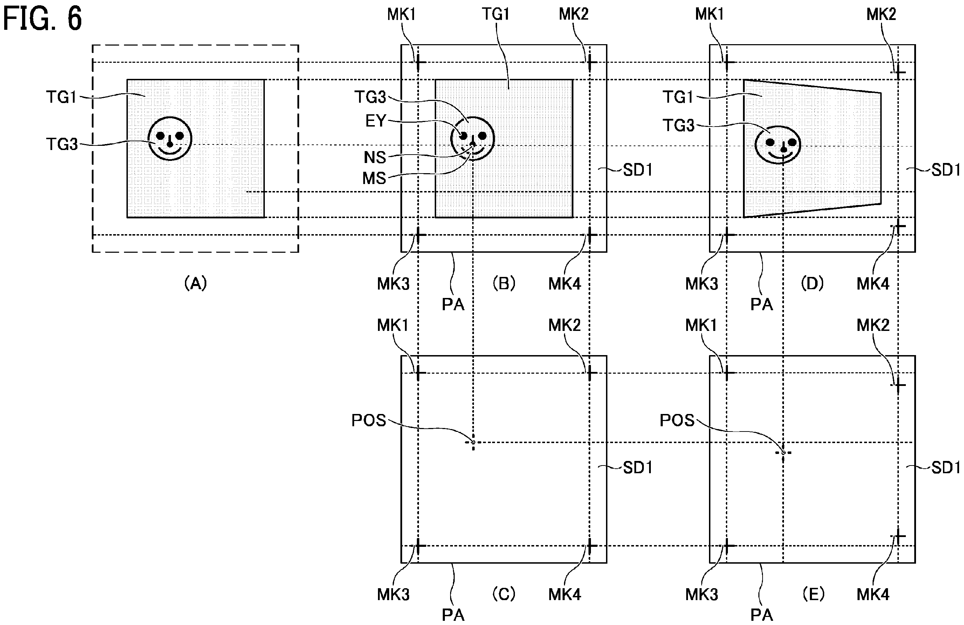

Referring now to FIG. 6, a description is given of a second processing example.

FIG. 6 including FIGS. 6(A) to 6(E) is a diagram illustrating a second processing example according to an embodiment of the present invention.

The second processing example is different from the first processing example in that the characteristic pixel is a part of a human face (hereinafter simply referred to as a "face TG3"). As illustrated in FIG. 6, examples of the part include, but are not limited to, an eye EY, a nose NS, and a mouth MS. A description is now given of a case, as an example, in which the characteristic pixel extraction unit 14 extracts the nose NS as a characteristic pixel. Note that the characteristic pixel is not limited to the eye EY, the nose NS, or the mouth MS. The characteristic pixel may be an entire face or another part such as an ear.

In many cases, the face TG3, the eye EY, the nose NS, and the mouth MS of a person remain substantially the same in, e.g., shape or color. Therefore, the face TG3, the eye EY, the nose NS, and the mouth MS are parts easily extractable in recognition processing. Thus, an easily extractable part is desirably used as an extracted portion.

FIG. 6(A) illustrates an image including the face TG3.

FIG. 6(B) illustrates an example in which a marker is added to each of the four corners, as in the first processing example. For example, the characteristic pixel extraction unit 14 extracts the position of each reference marker as illustrated in FIG. 6(C) from the image illustrated in FIG. 6(B), as in the first processing example. The characteristic pixel extraction unit 14 further extracts the position of the nose NS (hereinafter referred to as a "nose position POS"), as illustrated in FIG. 6(C), for example.

Next, as in the first processing example, after an image including the first object TG1 and the face TG3 is formed on the first side SD1, the reading unit 23 reads the image formed on the first side SD1.

Then, as in the first processing example, in a case in which the recording medium PA contracts during image formation on the first side SD1, the result of reading by the reading unit 23 may be an image as illustrated in FIG 6(D) in the present example. Therefore, in the present example, the nose position POS, the position of the second marker MK2, and the position of the fourth marker MK4 are particularly deviated from an ideal state (in the present example, the state of FIG. 6(C)) due to the contraction.

As in the first processing example, the correction unit 15 compares FIG. 6(E) with FIG. 6(C) to calculate a correction value. Based on such a correction value, the image processing unit 12 corrects the effect of, e.g., contraction so that the image forming apparatus 103 forms an image on the second side with a reduced deviation from the first side image.

Thus, use of a characteristic pixel such as the nose position POS allows the correction unit 15 to calculate the correction value for correction of the contraction, even with respect to, e.g., a central portion of the recording medium PA.

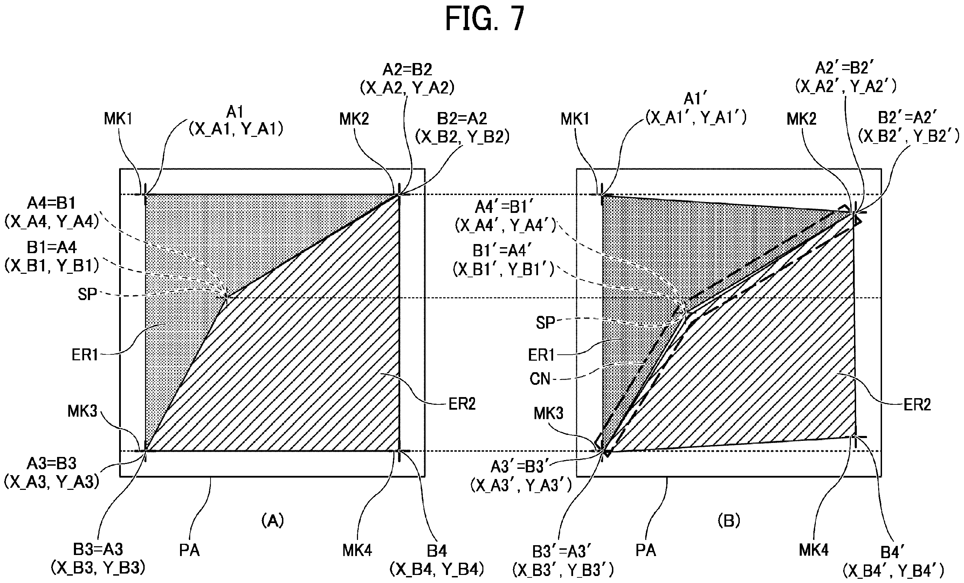

Referring now to FIG. 7, a description is given of an example of correction by projective transformation.

The position of a reference marker and the position of a characteristic pixel are preferably used as follows, for example.

FIG. 7 is a diagram illustrating an example of correction by projective transformation according to an embodiment of the present invention.

Similar to FIGS. 5(C) and 6(C), FIG. 7(A) illustrates the respective positions of the reference markers and the position of the characteristic pixel in an ideal state, for example. Specifically, the first marker MK1 is located at coordinates of A1 (X_A1, Y_A1) at the upper left in the present example of FIG. 7(A). Similarly, the second marker MK2 is located at coordinates of A2 (X_A2, Y_A2) at the upper right in the present example of FIG. 7(A). Further, the third marker MK3 is located at coordinates of A3 (X_A3, Y_A3) at the lower left in the present example of FIG. 7(A). Furthermore, the fourth marker MK4 is located at coordinates of B4 (X_B4, Y_B4) at the lower right in the present example of FIG. 7(A).

On the other hand, a characteristic pixel SP is located at coordinates of A4 (X_A4, Y_A4). In a case in which the characteristic pixel extraction unit 14 thus detects the respective positions of the four reference markers and the position of the characteristic pixel SP, the characteristic pixel extraction unit 14 connects, as vertices, the respective points of the reference markers and the characteristic pixel SP, to form multiple polygons. A description is now given of a case, as an example, in which four vertices are connected to form a quadrangle as illustrated in FIG. 7. Note that the polygon is not limited to a quadrangle. The number and shape of polygons and the number of vertices of the polygon are not limited to the illustrated example.

Specifically, in FIG. 7(A), connection of the vertex of the first marker MK1, the vertex of the second marker MK2, the vertex of the characteristic pixel SP, and the vertex of the third marker MK3 allows the characteristic pixel extraction unit 14 to generate a quadrangle (hereinafter referred to as a "first quadrangle ER1") at a substantially upper left position.

Similarly, in FIG. 7(A), connection of the vertex of the fourth marker MK4, the vertex of the second marker MK2, the vertex of the characteristic pixel SP, and the vertex of the third marker MK3 allows the characteristic pixel extraction unit 14 to generate a quadrangle (hereinafter referred to as a "second quadrangle ER2") at a substantially lower right position.

When multiple quadrangles such as the first quadrangle ER1 and the second quadrangle ER2 are formed, the image data can be divided into areas. As illustrated in FIG. 7, the polygons are preferably formed so as not to overlap each other.

The first quadrangle ER1 includes vertices of A1, A2, A4, and A3, as illustrated in FIG. 7. Similarly, the second quadrangle ER2 includes vertices of B1 (X_B1, Y_B1), B2 (X_B2, Y_B2), B4, and B3 (X_B3, Y_B3) as illustrated in FIG. 7. Therefore, the first quadrangle ER1 and the second quadrangle ER2 are subjectable to projective transformation, which deforms the first quadrangle ER1 and the second quadrangle ER2 or moves the respective positions of the vertices of the first quadrangle ER1 and the second quadrangle ER2 with the coordinate position information of the vertices of each of the first quadrangle ER1 and the second quadrangle ER2. In short, the projective transformation is, e.g., a process of transforming or moving a polygon.

Since the first side and the second side have a front-back relationship, the correction unit 15 changes the coordinate information acquirable from the first side into the coordinate information on the second side to perform the projective transformation on the second-side image for correction. Specifically, an image is often inverted vertically or horizontally with respect to the first-side image and formed on the second side. Note that the vertical or horizontal direction is often input by a user, for example. Therefore, between the first side and the second side, preferably, the coordinate information is vertically or horizontally inverted and used for the projective transformation.

When the projective transformation is performed for each polygon as illustrated in FIG. 7, for example, the first quadrangle ER1 and the second quadrangle ER2 are changed from the shape illustrated in FIG. 7(A) to the shape illustrated in FIG. 7(B). Specifically, the first quadrangle ER1 includes vertices of A1' (X_A1', Y_A1'), A2' (X_A2', Y_A2'), A4' (X_A4', Y_A4'), and A3' (X_A3', Y_A3'), as illustrated in FIG. 7(B). Similarly, the second quadrangle ER2 includes vertices of B1' (X_B1', Y_B1'), B2' (X_B2', Y B2'), B4' (X_B4', Y B4'), and B3' (X_B3', Y_B3'), as illustrated in FIG. 7(B). The projective transformation as illustrated in FIG. 7 allows the correction unit 15 to calculate a correction value for matching the positions at which the first-side image and the second-side image are formed.

In a case in which the correction is performed by the projective transformation as illustrated in FIG. 7, preferably, an area including a constituent line of the polygon is also corrected. Hereinafter, such an area is referred to as a "boundary area CN."

The boundary area CN is, e.g., an area surrounded by the constituent lines located at the boundary between the polygons as illustrated in FIG. 7. As illustrated in FIG. 7, the individual polygons may be subjected to different projective transformations. Therefore, in the boundary area CN, a so-called "streak" may be formed, or the constituent lines may be deviated from each other, in other words, the joints may be deviated from each other, resulting in formation of a step. Such a phenomenon often causes deterioration of image quality.

To address such a situation, the image processing unit 12 performs image processing preferably based on the boundary area CN. In other words, preferably, the image processing unit 12 performs image processing on the boundary area CN such that the joints between the polygons appear to be naturally connected.

For example, the image processing unit 12 blurs the boundary area CN, performs image processing on the boundary area CN based on the characteristics of pixels adjacent to the boundary area CN, or performs image processing on the boundary area CN based on the characteristics of pixels located at end portions of the polygons.

Such image processing to blur the "streak" and the periphery of the "streak" makes the "streak" inconspicuous. Relatedly, the "streak" is made inconspicuous when, for example, the pixels adjacent to the "streak" or the pixels located at the end portions of the polygons are copied to the "streak" and the periphery of the "streak".

Note that the image processing on the boundary area CN by the image processing unit 12 is not limited to the copying of the pixels located at the end portions of the polygons to the boundary area CN. Alternatively, for example, the image processing unit 12 may firstly detect a pixel from an end portion of each of the multiple polygons. In this case, the boundary area CN is located between a pixel, herein referred to as a first pixel, of one of the multiple polygons and a pixel, herein referred to as a second pixel, of another one of the multiple polygons. Then, the image processing unit 12 performs processing such as the interpolation of pixels such that the pixel value linearly changes between the first pixel and the second pixel. That is, the image processing unit 12 may perform image processing, with reference to the pixels adjacent to the boundary area CN or the pixels located at the end portions of the polygons, such that the boundary area CN located between the pixels adjacent to the boundary area CN or between the pixels located at the end portions of the polygons has a natural pixel value.

Similarly, in a case in which a step is formed at the joints, for example, the image processing unit 12 may detect the pixels located at the end portions of the polygons and perform image processing so as to connect the pixels, resulting in deformation of the polygons.

As described above, the image processing unit 12 performs image processing on an area including the "streak" or a step to generate a natural image.

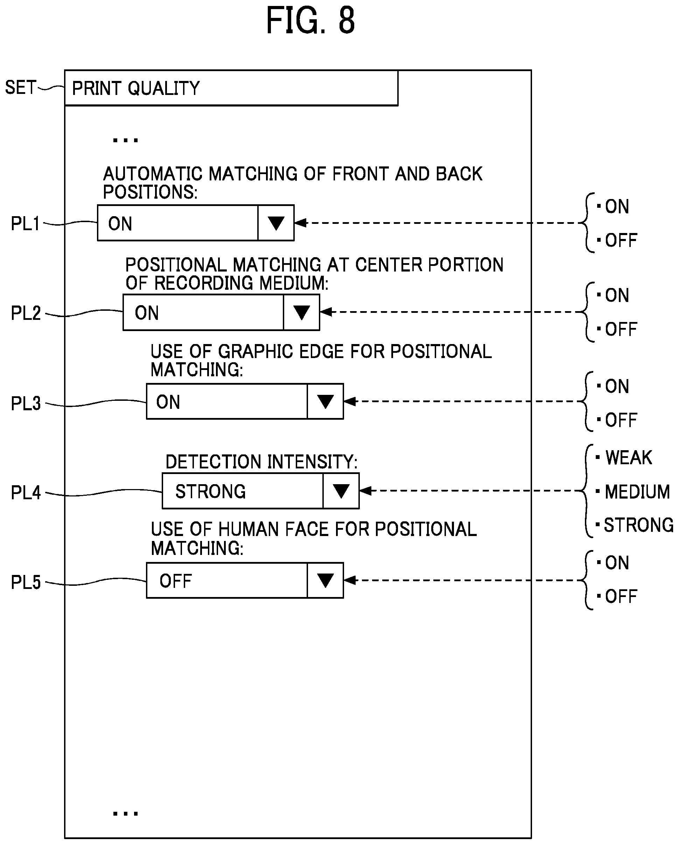

Referring now to FIG. 8, a description is given of an example of a user interface (UI).

FIG. 8 is a diagram illustrating an operation screen SET according to an embodiment of the present invention.

For example, the characteristic pixel extraction unit 14 is set according to an input value received through the operation screen as illustrated in FIG. 8. Specifically, the operation screen SET illustrated in FIG. 8 includes, as an UI, a first menu PL1 for "automatic matching of front and back positions," a second menu PL2 for "positional matching at center portion of a recording medium," a third menu PL3 for "use of an graphic edge for positional matching," a fourth menu PL4 for "detection intensity," and a fifth menu PL5 for "use of a human face for positional matching."

As illustrated in FIG. 8, the first menu PL1 is a UI that receives an operation of switching between "ON" and "OFF" to determine whether to match the front and back positions.

As illustrated in FIG. 8, the second menu PL2 is a UI that receives an operation of switching between "ON" and "OFF" to determine whether to match front and back positions at the center portion of a recording medium when matching the front and back positions.

The third menu PL3 is a UI that receives an operation of switching between "ON" and "OFF" to determine whether to extract an edge portion as a characteristic pixel and match the front and back positions.

The fourth menu PL4 is a UI that receives an operation of switching the intensity in detecting the edge portion, for example. FIG. 8 illustrates an example in which the intensity is switched between three levels of "weak," "medium," and "strong". Note that the intensity is not limited to the three levels. The intensity may be divided into four or more levels. The intensity may be input as a numerical value, for example.

The fifth menu PL5 is a UI that receives an operation of switching between "ON" and "OFF" to determine whether to extract, e.g., a human face as a characteristic pixel and match the front and back positions. Note that the characteristic pixel is not limited to the human face. The characteristic pixel may be specified elsewhere.

When matching the front and back positions, it is often emphasized that the lines located at the end portions of an image appear to overlap each other on the front and back sides of a recording medium, for example. Therefore, the lines on the end portions of the image formed on the front and back sides of a sheet subjected to, e.g., imposition are preferably matched between the front side and the back side of the sheet.

In such a case, the user sets the input value of the first menu PL1 and the input value of the third menu PL3 to "ON." In response to such an operation, the image processing apparatus matches the front and back positions, based on the edge portions of a graphic object, so that the images are formed while the lines located at the edge portions of the images appear to overlap each other on the front and back sides of the sheet.

On the other hand, depending on, e.g., the contraction of a recording medium, trying to forcibly match the front and back positions may cause a phenomenon that a line looks bent. In such a case, the user sets the input value of the third menu PL3 to "OFF." In response to such an operation, the image processing apparatus does not extract the edge portions and therefore does not forcibly match the front and back positions, thus often enhancing the image quality.

On the other hand, depending on, e.g., the contraction of a recording medium, trying to forcibly match the front and back positions may cause a phenomenon that a human face is distorted. In such a case, the user sets the input value of the fifth menu PL5 to "OFF." In response to such an operation, the image processing apparatus does not extract the human face, thus preventing the distortion and often enhancing the image quality.

The detection intensity is preferably adjusted with the fourth menu PL4. For example, the user sets the input value of the fourth menu PL4 to increase a detection threshold value so that the edge portions are extracted as characteristic pixels. In response to such an operation, the image processing apparatus extracts a decreased number of edge portions, thus reducing the possibility of picking up extra edge portions. In short, the image processing apparatus reduces erroneous detection.

By contrast, the user sets the input value of the fourth menu PL4 to decrease the detection threshold. In response to such an operation, the image processing apparatus extracts an increased number of edge portions. Accordingly, the image processing apparatus matches positions at many locations, thus accurately matching the front and back positions.

As described above, a UI such as the fourth menu PL4 allows adjustment of, e.g., the number of locations at which the front and back positions are matched.

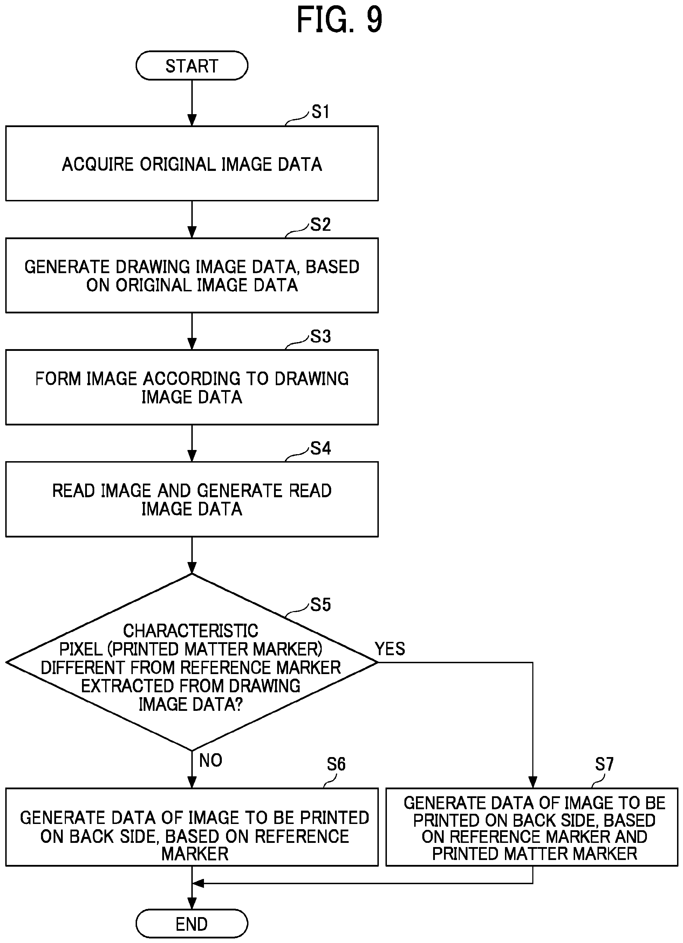

Referring now to FIG. 9, a description is given of an example of an overall process.

FIG. 9 is a flowchart of an overall process according to an embodiment of the present invention.

In step S1, the image data acquisition unit 11 acquires original image data.

In step S2, the image processing unit 12 generates first drawing image data, based on the original image data.

In step S3, the image forming unit 22 forms an image according to the first drawing image data generated by the image processing unit 12.

In step S4, the reading unit 23 reads the image formed by the image forming unit 22 and generates read image data.

In step S5, the characteristic pixel extraction unit 14 determines whether a characteristic pixel (i.e., printed matter marker) different from a reference marker has been extracted from the first drawing image data.

When the characteristic pixel has been extracted (YES in step S5), the image processing apparatus proceeds to step S7. By contrast, when the characteristic pixel has not been extracted (NO in step S5), the image processing apparatus proceeds to step S6.

In step S6, based on a reference marker, the correction unit 15 calculates a correction value for correction of second-side image data that is used to form the second-side image. Then, the image processing unit 12 generates second drawing image data (i.e., data of an image to be printed on the second side), based on the correction value.

On the other hand, in step S7, the correction unit 15 calculates the correction value, based on the reference marker and the characteristic pixel (i.e., printed matter marker). Then, the image processing unit 12 generates the second drawing image data (i.e., data of an image to be printed on the second side), based on the correction value.

As described above, the configuration using, e.g., the reference marker and the characteristic pixel allows the adjustment of the front-side position and the back-side position without a special configuration. In order to adjust the positions of a front-side image and a back-side image, specifically, instead of using a special colorant and a special sensor, a reference point (as a characteristic pixel such as an edge portion) that is used for the adjustment of the front-side position and the back-side position is extracted from an image to be printed on the front side. With the position of the extracted reference point, the image data of an image to be printed on the back side is corrected. Thus, without a special configuration, the front-side position and the back-side position are adjusted.

A description is now given of variations.

The reference point serving as a reference for determining the "deviation" of the reference marker and the characteristic pixel may be input according to, e.g., a read reference printed material (hereinafter referred to as a "sample"). That is, the image processing apparatus may extract, e.g., the characteristic pixel from the sample and use the characteristic pixel as the reference point.

Specifically, the image processing apparatus may read the sample in advance and receive an input operation to set the reference marker and the characteristic pixel indicated by the sample as the reference. That is, the image processing apparatus may compare a target image such as the first-side image with the sample to calculate, e.g., an amount of deviation, which is to be corrected.

Alternatively, the position serving as the reference point may be designated by a user, for example. For example, firstly, the image processing apparatus reads a sample in advance. Next, the image processing apparatus displays the sample to the user. Then, the user may designate, for the displayed sample, a point serving as a reference in comparison of the reference marker and the characteristic pixel.

The image processing apparatus may perform an inspection.

For example, the image processing apparatus compares a formed image with a sample. Based on the result of the comparison, the image processing apparatus may inspect whether the formed image has a defect.

Examples of the defect include, but are not limited to, a "streak" and a printing error. In a case in which the formed image is tilted or distorted, the formed image has a defect. Another example of the defect is a certain amount of "deviation" between an image formed on the front side of a recording medium and an image formed on the back side of the recording medium.

In particular, on recording media larger than A4 size, defects are often noticeable.

Therefore, the image processing apparatus may determine the presence or absence of a defect by inspection. The image processing apparatus is preferably configured to, based on the result of the inspection, provide information or perform redoing, for example, when the defect is present.

According to the embodiments and the variations described above, a characteristic pixel is extracted from the original image data corresponding to an actual image to be printed according to a print instruction from a user. With the characteristic pixel, the positions are adjusted between an image to be formed on the front side of a recording medium and an image to be formed on the back side of the recording medium. Accordingly, the image positions are adjustable without using a special colorant and a special sensor.

As described above, in the embodiments and the variations described above, a reference marker such as a register mark may be formed in addition to the characteristic pixel on a recording medium. In this case, the reference marker is preferably formed with ink or toner that is used to form an image as a target image to be printed according to a print instruction from a user. In this case, the image positions are adjustable without using a colorant (e.g., ink or toner) dedicated for forming the reference marker.

The image forming apparatus 103 may form an image with, e.g., clear ink in addition to CMYK color inks.

A description is now given of other embodiments of the present invention.

In an image processing system according to an embodiment, e.g., an image processing apparatus and an information processing apparatus may perform the above-described processing in a distributed, parallel, or redundant manner.

In the image processing system according to an embodiment, each of the above-described apparatuses does not have to be a single device. For example, each of the above-described apparatuses may be a combination of multiple devices. Note that, according to an embodiment, the image processing system may have a configuration including an apparatus other than the apparatuses illustrated in FIG. 1.

Note that the image processing apparatus may be, e.g., an image forming apparatus provided that the image processing apparatus has a communication function. Examples of the image processing apparatus include, but are not limited to, an output device, such as a projector (PJ), an interactive whiteboard (IWB; an electronic whiteboard capable of mutual communication and having a blackboard function), and a digital signage, a head-up display (HUD), an industrial machine, an imaging device, a sound collecting device, a medical device, a networked home appliance, an automobile (connected car), a laptop computer or PC, a mobile phone, a smartphone, a tablet terminal, a game console, a personal digital assistant (PDA), a digital camera, a wearable computer or PC, and a desktop computer or PC.

According to an embodiment, the image processing system and the image processing apparatus may use, e.g., artificial intelligence (AI). For example, the image processing system and the image processing apparatus may be configured to perform machine learning in an image recognition process of recognizing, e.g., a reference marker and a face, to enhance the recognition accuracy.

Note that all or part of each process according to the embodiments of the present invention may be described in a computer language and implemented by a program that causes a computer to execute an image processing method. That is, the program is a computer program that causes a computer such as an image processing apparatus or an image processing system to execute each process.

Therefore, when the image processing method is executed according to the program, an arithmetic device and a control device included in the computer perform arithmetic and control, respectively, according to the program to execute the respective processes. A storage device included in the computer stores data that is used for the processes according to the program so that the computer executes the processes.

The program can be recorded in a computer-readable storage or carrier medium and distributed. Note that examples of the storage or carrier medium include, but are not limited to, a magnetic tape, a flash memory, an optical disk, a magneto-optical disc, and a magnetic disk. The program can be distributed through a telecommunication line.

The present invention can be implemented in any convenient form, for example using dedicated hardware, or a mixture of dedicated hardware and software. The present invention may be implemented as computer software implemented by one or more networked processing apparatuses. The processing apparatuses can include any suitably programmed apparatuses such as a general-purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can include a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid-state memory device.

## Claims

1. An image processing apparatus (102) comprising:
an image data acquisition unit (11) configured to acquire first-side image data and second-side image data;
an image processing unit (12) configured to generate, based on the first-side image data, first drawing image data indicating an image to be formed on a first side of a recording medium;
a read image data acquisition unit (13) configured to acquire read image data of the image formed on the first side of the recording medium according to the first drawing image data;
a characteristic pixel extraction unit (14) configured to extract a characteristic pixel, based on the first-side image data; and
a correction unit (15) configured to calculate a correction value for correction of the second-side image data, based on a position of a pixel corresponding to the characteristic pixel included in the first drawing image data and a position of the pixel corresponding to the characteristic pixel included in the read image data,
the image processing unit (12) being configured to generate, based on the second-side image data acquired by the image data acquisition unit (11) and the correction value, second drawing image data indicating an image to be formed on a second side of the recording medium.

2. The image processing apparatus (102) according to claim 1,
wherein the characteristic pixel extraction unit (14) is configured to extract, as the characteristic pixel, an edge portion, based on the first-side image data.

3. The image processing apparatus (102) according to claim 1,
wherein the characteristic pixel extraction unit (14) is configured to extract, as the characteristic pixel, each of a plurality of continuous pixels, based on the first-side image data.

4. The image processing apparatus (102) according to claim 1,
wherein the characteristic pixel extraction unit (14) is configured to extract, as the characteristic pixel, each of a plurality of discrete pixels, based on the first-side image data.

5. The image processing apparatus (102) according to any one of claims 1 to 4,
wherein the characteristic pixel extraction unit (14) is configured to extract a position of a reference marker, and
wherein the correction unit (15) is configured to calculate the correction value for correction of the second-side image data, based on the position of the pixel corresponding to the characteristic pixel included in the first drawing image data, the position of the pixel corresponding to the characteristic pixel included in the read image data, and the position of the reference marker.

6. An image processing system (100) comprising:
the image processing apparatus (102) according to claim 1; and
an image forming apparatus (103) including:
an image forming unit (22) configured to form the image on the recording medium according to the first drawing image data; and
a reading unit (23) configured to read the image formed on the recording medium by the image forming unit (22).

7. An image processing method comprising:
acquiring first-side image data and second-side image data;
generating, based on the first-side image data, first drawing image data indicating an image to be formed on a first side of a recording medium;
acquiring read image data of the image formed on the first side of the recording medium according to the first drawing image data;
extracting a characteristic pixel, based on the first-side image data;
calculating a correction value for correction of the second-side image data, based on a position of a pixel corresponding to the characteristic pixel included in the first drawing image data and a position of the pixel corresponding to the characteristic pixel included in the read image data; and
generating, based on the acquired second-side image data and the correction value, second drawing image data indicating an image to be formed on a second side of the recording medium.

8. A carrier medium carrying computer-readable program code that causes a computer to perform the image processing method according to claim 7.
